(19) **Europäisches Patentamt / European Patent Office / Office européen des brevets**

(11) **EP 4 645 462 A1**

(12) **EUROPEAN PATENT APPLICATION**

(43) Date of publication:
**05.11.2025 Bulletin 2025/45**

(21) Application number: **25169887.4**

(22) Date of filing: **10.04.2025**

(51) International Patent Classification (IPC):
**H01M 4/36** (2006.01)   **H01M 4/136** (2010.01)
**H01M 4/525** (2010.01)   **H01M 4/58** (2010.01)
**H01M 4/62** (2006.01)

(52) Cooperative Patent Classification (CPC):
**H01M 4/366; H01M 4/136; H01M 4/364;
H01M 4/525; H01M 4/5825; H01M 4/623**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.04.2024 KR 20240057147**

(71) Applicant: **SAMSUNG SDI CO., LTD.
Yongin-si, Gyeonggi-do 17084 (KR)**

(72) Inventors:
• **KIM, Young-Ki**
  **Yongin-si (KR)**
• **CHOI, Aram**
  **Yongin-si (KR)**
• **KIM, Sangmi**
  **Yongin-si (KR)**
• **DOO, Sungwook**
  **Yongin-si (KR)**
• **KANG, Gwiwoon**
  **Yongin-si (KR)**
• **LEE, Soonrewl**
  **Yongin-si (KR)**

(74) Representative: **Marks & Clerk LLP
15 Fetter Lane
London EC4A 1BW (GB)**

(54) **POSITIVE ELECTRODE AND RECHARGEABLE LITHIUM BATTERY INCLUDING THE POSITIVE ELECTRODE**

(57)    A positive electrode for a rechargeable lithium battery includes a current collector, a first active material layer on the current collector, and a second active material layer on the first active material layer. The first active material layer includes a first particles that are olivine structured compounds, second particles that are a layered compound, a first conductive material, and a first binder. The second active material layer includes third particles that are olivine structured compounds, a second conductive material, and a second binder. The first particles are in the form of secondary particles in which a plurality of first primary particles are agglomerated, the first particles have an average diameter ($D_{50}$) of about 3 $\mu m$ to about 7 $\mu m$, and the second particles have an average diameter ($D_{50}$) of about 3 $\mu m$ to about 14 $\mu m$.

## FIG. 6

**Description**

BACKGROUND

The present disclosure relates to a positive electrode and a rechargeable lithium battery including the positive electrode. More particularly, aspects of the present disclosure relate to a positive electrode including an olivine-based lithium compound and a rechargeable lithium battery including the same.

The rapid spread of battery-powered devices, such as mobile phones, laptop computers, and electric vehicles, has driven a sharp rise in demand for rechargeable batteries provided with high energy density and high capacity. Accordingly, extensive research efforts have been directed towards improving the performance of rechargeable lithium batteries.

Rechargeable lithium batteries include a positive electrode and a negative electrode, each including an active material that allows intercalation and deintercalation of lithium ions, and an electrolyte solution. The batteries produce electrical energy from redox reactions that take place as lithium ions are intercalated into or deintercalated from the positive electrode and the negative electrode.

SUMMARY

The present disclosure provides a positive electrode allowing an electrode plate that is readily prepared by increasing bondability between a current collector and a positive electrode active material.

The present disclosure also provides a positive electrode having improved capacity and lifetime characteristics.

An embodiment of the present disclosure provides a positive electrode for a rechargeable lithium battery including a current collector, a first active material layer on the current collector, and a second active material layer on the first active material layer, wherein the first active material layer includes first particles that are olivine structured compounds represented by Formula 1 below, second particles that are layered compounds represented by Formula 2 below, a first conductive material, and a first binder, and the second active material layer includes third particles that are olivine structured compounds represented by Formula 3 below, a second conductive material, and a second binder. The first particles are in the form of secondary particles in which a plurality of first primary particles are agglomerated (aggregated), the first particles have an average particle diameter ($D_{50}$) of about 3 $\mu$m to about 7 $\mu$m, and the second particles have an average particle diameter ($D_{50}$) of about 3 $\mu$m to about 14 $\mu$m, wherein Formula 1 is:

$$Li_{a1}Fe_{x1}B1_{y1}PO_{4-c1}$$

With $0.8 < a1 \leq 1.2$, $0.95 \leq x1 \leq 0.999$, $0.001 \leq y1 \leq 0.05$, $x1+y1=1$, and $0 \leq c1 \leq 0.05$, and B1 is at least one of Ti and a transition metal having an oxidation number of 4,
wherein Formula 2 is:

$$Li_{a2}Ni_{x2}Co_{y2}B2_{z2}O_{2-c2}$$

with $0.8 < a2 \leq 1.2$, $0.9 \leq x2 \leq 1.05$, $0.03 \leq y2 \leq 0.10$, $0.01 \leq z2 \leq 0.05$, and $0 \leq c2 \leq 0.05$, and B2 is at least one of Al and Mn, and
wherein Formula 3 is:

$$Li_{a3}Fe_{x3}B3_{y3}PO_{4-c3}$$

with $0.8 < a3 \leq 1.2$, $0.95 \leq x3 \leq 0.999$, $0.001 \leq y3 \leq 0.05$, $x3+y3=1$, and $0 \leq c3 \leq 0.05$, and B3 is at least one of Ti and a transition metal having an oxidation number of 4.

In an embodiment of the present disclosure, a positive electrode for a rechargeable lithium battery includes a current collector, a first active material layer on the current collector, and a second active material layer on the first active material layer, wherein the first active material layer includes first particles that are olivine structured compounds represented by Formula 1 below, second particles that are layered compounds represented by Formula 2 below, a first conductive material, and a first binder, and the second active material layer includes third particles that are olivine structured compounds represented by Formula 3 below, a second conductive material, and a second binder. The first particles are in the form of secondary particles in which a plurality of primary particles are agglomerated (aggregated). The first binder and the first conductive material may constitute a first functional additive, the second binder and the second conductive material may constitute a second functional additive, and a weight ratio of the first functional additive in the first active material layer may be lower than a weight ratio of the second functional additive in the second active material layer, wherein Formula 1 is:

$$Li_{a1}Fe_{x1}B1_{y1}PO_{4-c1}$$

with $0.8 < a1 \leq 1.2$, $0.95 \leq x1 \leq 0.999$, $0.001 \leq y1 \leq 0.05$, $x1+y1=1$, and $0 \leq c1 \leq 0.05$, and B1 is at least one of Ti and a transition metal having an oxidation number of 4,

wherein Formula 2 is:

$$Li_{a2}Ni_{x2}Co_{y2}B2_{z2}O_{2-c2}$$

with $0.8 < a2 \leq 1.2$, $0.9 \leq x2 \leq 1.05$, $0.03 \leq y2 \leq 0.10$, $0.01 \leq z2 \leq 0.05$, and $0 \leq c2 \leq 0.05$, and B2 is at least one of Al and Mn, and wherein Formula 3 is:

$$Li_{a3}Fe_{x3}B3_{y3}PO_{4-c3}$$

with $0.8 < a3 \leq 1.2$, $0.95 \leq x3 \leq 0.999$, $0.001 \leq y3 \leq 0.05$, $x3+y3=1$, and $0 \leq c3 \leq 0.05$, and B3 is at least one of Ti and a transition metal having an oxidation number of 4.

In an embodiment of the present disclosure, a rechargeable lithium battery includes the positive electrode described above.

At least some of the above and other features of the invention are set out in the claims.

BRIEF DESCRIPTION OF THE FIGURES

The accompanying drawings are included to provide a further understanding of the present disclosure and are incorporated in and constitute a part of this specification. The drawings illustrate embodiments of the present disclosure and, together with the description, serve to explain principles of the present disclosure. In the drawings:

FIG. 1 is a simplified conceptual view showing a rechargeable lithium battery according to embodiments of the present disclosure;

FIGS. 2 to 5 are schematic views each showing a rechargeable lithium battery according to an embodiment, with FIG. 2 showing a cylindrical battery, FIG. 3 showing a prismatic battery, and FIGS. 4 and 5 showing pouch-type batteries;

FIG. 6 is a cross-sectional view showing a positive electrode for a rechargeable battery according to embodiments of the present disclosure;

FIG. 7 is an enlarged view showing a first active material layer according to embodiments of the present disclosure;

FIG. 8 is an enlarged view showing a second active material layer according to embodiments of the present disclosure;

FIG. 9 is an enlarged view showing a second active material layer according to embodiments of the present disclosure;

FIG. 10 is a pair of scanning electron microscope (SEM) images showing a first particle of Preparation Example 1 according to the present disclosure;

FIG. 11 is a pair of SEM images showing a second particle of Preparation Example 2 according to the present disclosure;

FIG. 12 is a pair of SEM images showing a second particle according to an embodiment of the present disclosure;

FIG. 13 is a pair of SEM images showing a third particle of Preparation Example 3-1 according to the present disclosure; and

FIG. 14 is a pair of SEM images showing a third particle of Preparation Example 3-2 according to the present disclosure.

DETAILED DESCRIPTION

In order to sufficiently understand the configuration and effect of the present disclosure, some embodiments of the present disclosure will be described with reference to the accompanying drawings. It should be noted, however, that the present disclosure is not limited to the following embodiments and may be implemented in various forms. Rather, the embodiments are provided only to disclose the present disclosure and let those skilled in the art fully understand the scope of the present disclosure.

In this description, it will be understood that, when an element is referred to as being on another element, the element can be directly on the other element or intervening elements may be present between therebetween. In the drawings, thicknesses of some components are exaggerated for effectively explaining the technical contents. Like reference numerals refer to like elements throughout the specification.

The embodiments described herein will be explained with reference to the cross-sectional views and/or plan views as ideal example views of the present disclosure. In the drawings, the thicknesses of films and regions may be exaggerated for effective description of the technical contents. Thus, regions presented as an example in the drawings have general properties, and shapes of the exemplified areas are used to illustrate specific shapes of a device region. Therefore, this should not be construed as limited to the scope of the present disclosure. Although the terms such as first, second, and third are used to describe various components in various embodiments herein, the components should not be limited to these terms. These terms are used only to distinguish one component from another component. Embodiments described and exemplified herein include complementary embodiments thereof.

Unless otherwise specially noted in this description, the expression of singular form may include the expression of plural form. In addition, unless otherwise specially noted, the phrase "A or B" may indicate "A but not B", "B but not A", and "A and B". The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter ($D_{50}$) where a cumulative volume is about 50 volume % in a particle size distribution. The average particle diameter ($D_{50}$) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and then from this, the average particle diameter ($D_{50}$) value may be obtained through a calculation. A laser scattering method also may be utilized to measure the average particle diameter ($D_{50}$). In the laser scattering method, a target particle is distributed in a distribution solvent, introduced into a laser scattering particle-diameter measurement device (e.g., MT3000 commercially available from Microtrac, Inc), irradiated with ultrasonic waves of 28 kHz at a power of 60 W, and then an average particle diameter ($D_{50}$) is calculated in the 50% standard of diameter distribution in the measurement device.

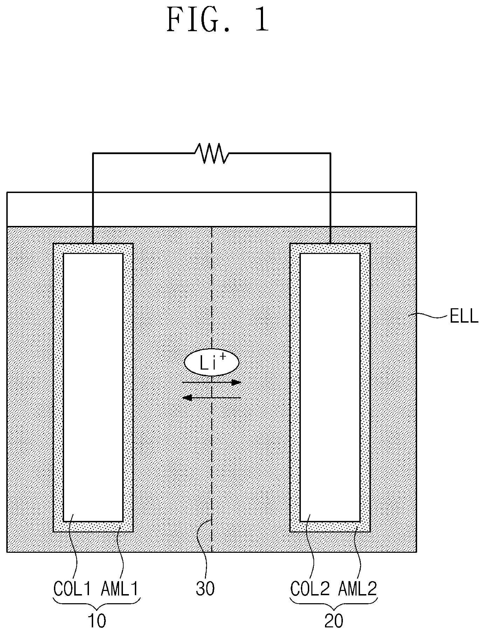

FIG. 1 is a cross-sectional view of a rechargeable lithium battery according to embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. In particular, the positive electrode 10, the negative electrode 20 and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

## Positive Electrode

The positive electrode 10 for a rechargeable lithium battery includes a current collector COL1 and a positive electrode active material layer AML1 formed on the current collector COL1. The positive electrode active material layer AML1 includes a positive electrode active material and further includes a binder and a conductive material.

The positive electrode 10 may further include an additive that can serve as a sacrificial positive electrode.

Al may be used for the current collector COL1, but the present disclosure is not limited thereto.

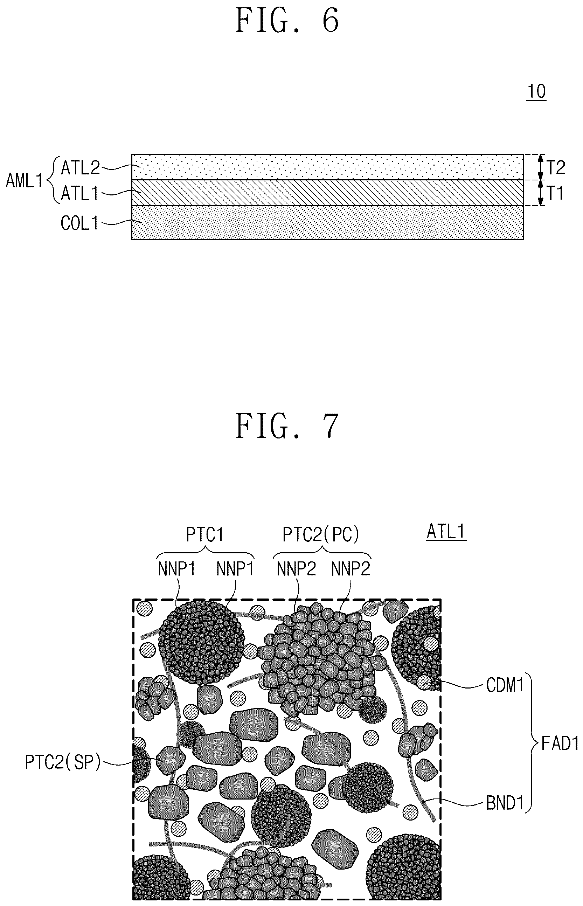

The positive electrode 10 according to embodiments of the present disclosure will be described in detail below with reference to FIG. 6.

## Negative Electrode

The negative electrode 20 for a rechargeable lithium battery may include a current collector COL2 and a negative electrode active material layer AML2 on the current collector COL2. The negative electrode active material layer AML2 may include a negative electrode active material, and the negative electrode active material layer may further include a binder and/or a conductive material (e.g., an electrically conductive material).

The negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles to each other and also to attach the negative electrode active material to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, poly-amideimide, polyimide, or a combination thereof.

The aqueous binder may include a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resins, polyvinyl alcohol, or a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples of the conductive material include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof.

The negative current collector COL2 may include a copper foil, a nickel foil, a stainless steel foil, a titanium foil, a nickel foam, a copper foam, a polymer substrate coated with a conductive metal, or a combination thereof.

## Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, crystalline carbon, amorphous carbon, or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x < 2$), a Si-Q alloy, or a combination therefore. wherein the Si-Q alloy, Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, $SnO_2$, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particles be dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

## Separator

Depending on the type of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be a polymer film formed of polyolefin polymer such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, , and polytetrafluoroethylene, e.g. TEFLON™, or a copolymer, or mixture of two or more thereof.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, $MgO$, $NiO$, $CaO$, $GaO$, $ZnO$, $ZrO_2$, $Y_2O_3$, $SrTiO_3$, $BaTiO_3$, $Mg(OH)_2$, boehmite, and a combination thereof. But the present disclosure is not limited to these examples.

The organic material and the inorganic material may be mixed in one coating layer, or a coating layer including an organic material and a coating layer including an inorganic material may be stacked.

## Electrolyte Solution

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of about 1:1 to about 1:9.

When the lithium salt is dissolved in the organic solvent, it supplies lithium ions in a battery, enables a basic operation of a rechargeable lithium battery, and improves transportation of the lithium ions between positive and negative electrodes. Examples of the lithium salt include $LiPF_6$, $LiBF_4$, $LiSbF_6$, $LiAsF_6$, $LiClO_4$, $LiAlO_2$, $LiAlCl_4$, $LiPO_2F_2$, $LiCl$, $LiI$, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluoro(oxalato)borate(LiDFOB), lithium difluorobis(oxalato)phosphate (LiDFBOP), and lithium bis(oxalato)borate (LiBOB).

## Rechargeable Lithium Battery

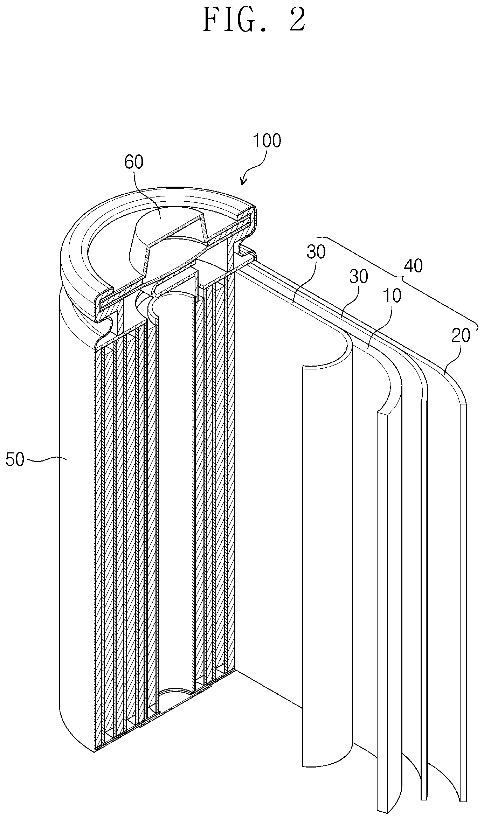

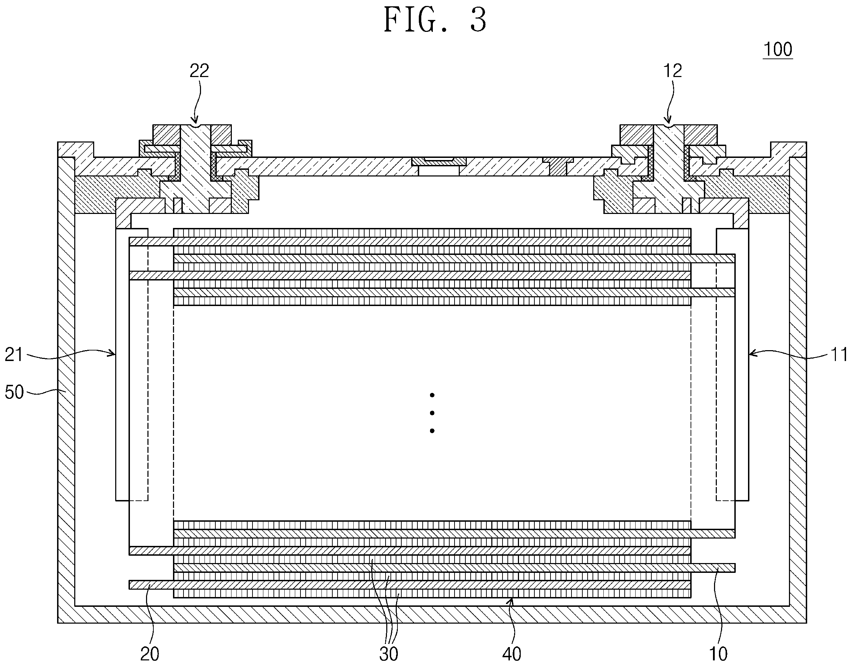

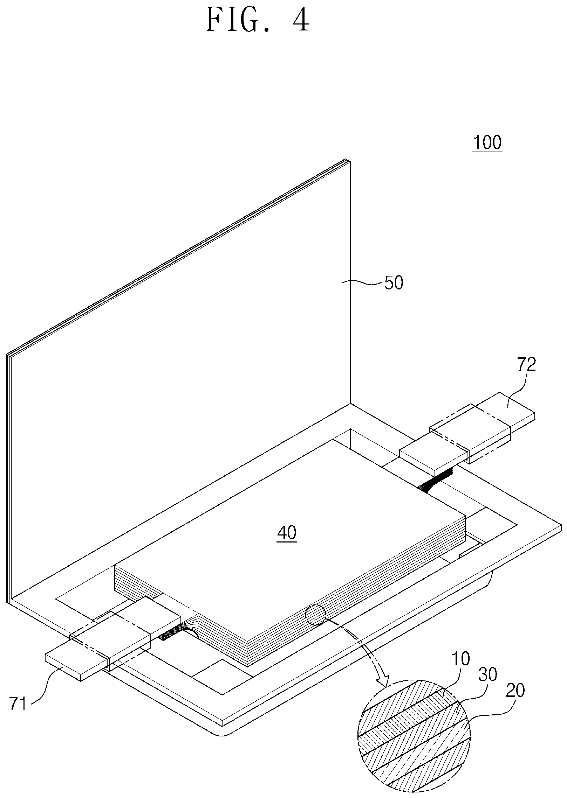

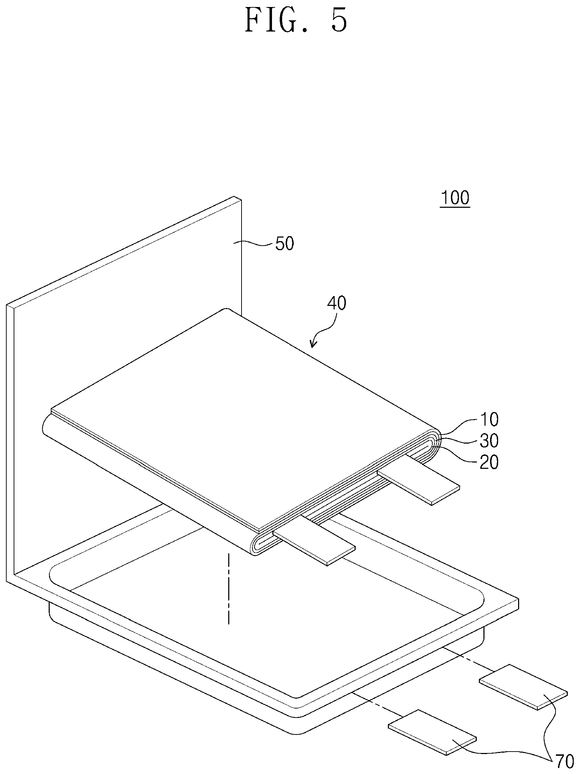

The rechargeable lithium battery may be classified into cylindrical, prismatic, pouch, or coin-type batteries, and the like depending on its shape. FIGS. 2 to 5 are schematic views illustrating a rechargeable lithium battery according to embodiments. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to outside of the battery.

The rechargeable lithium battery according to an embodiment may be used in automobiles, mobile phones, and/or various types of electric devices, as non-limiting examples.

Hereinafter, first particles PTC1, second particles PTC2, third particles PTC3, the first active material layer ATL1, the second active material layer ATL2, and the positive electrode having a double layer structure will be described in more detail.

First **Particle**

The first particle PTC1 includes an olivine structured lithium compound represented by Formula 1: $Li_{a1}Fe_{x1-}B1_{y1}PO_{4-c1}$

In Formula 1, $0.8<a1\leq1.2$, $0.95\leq x1\leq0.999$, $0.001\leq y1\leq0.05$, $x1+y1=1$, and $0\leq c1\leq0.05$ is satisfied, and B1 is at least one element selected from the group consisting of Ti and a transition metal having an oxidation number of 4. B1 may be a dopant with which the first particle PTC1 is doped.

The first particle PTC1 provides benefits including cost efficiency, structural stability, and excellent lifetime characteristics. The first particle PTC1 contains Fe as a key component, and, thus, is relatively inexpensive and has relatively small chemical changes, even after repeated charging/discharging due to its structural stability.

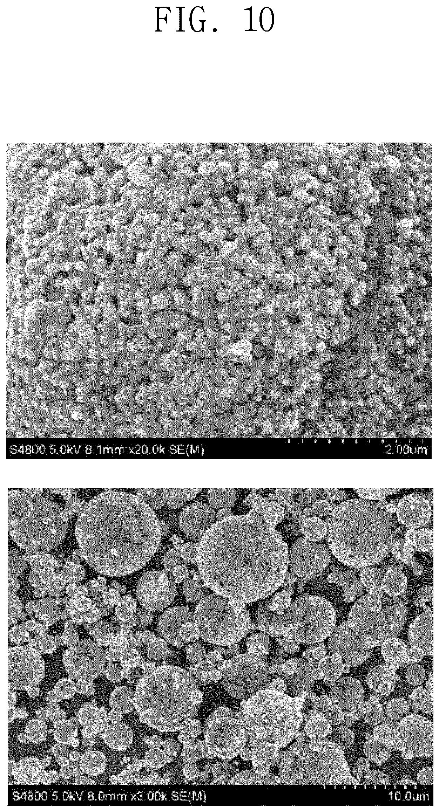

Referring to FIGS. 7 and 10, the first particle PTC1 may be in the form of a secondary particle. The secondary particle may be in the form of a polycrystal, which indicates a form in which at least two first primary particles NNP1 are agglomerated (aggregated). That is, one first particle PTC1 may include a plurality of first primary particles NNP1 agglomerated (aggregated) together. The first particle PTC1 may be in the shape of a sphere or an oval.

A dopant may have the effect of controlling the uniform growth of the first primary particles NNP1 of the first particle PTC1. The dopant may thereby improve charging/discharging efficiency, low-temperature characteristics, and lifetime characteristics in the rechargeable lithium batteries.

In an embodiment, the first particle PTC1 may include a coating layer on a surface thereof. The coating layer may cover the entire surface of the first particle PTC1 or a portion of the surface of the first particle PTC1. The coating layer may include carbon and/or a carbon-containing compound. The coating layer may provide the first particle PTC1 with improved structural stability or improved electrical conductivity.

The coating layer may further include at least one element selected from a transition metal having an oxidation number of 4. Metal-containing compounds, such as titanium-containing compounds and transition metal-containing compounds having an oxidation number of 4, may be, for example, metal oxides, metal hydroxides, metal carbonates, composites thereof, or mixtures thereof. The metal-containing compounds may further include other metals or non-metallic elements. For example, the metal-containing compounds may further include lithium.

In an embodiment, the first particle PTC1 may further include a grain boundary coating layer on a surface of each of the first primary particles NNP1. The grain boundary coating layer may be present inside the first particle PTC1. The grain boundary coating layer may be formed along an interface between the first primary particles NNP1 inside the first particle PTC1. That is, the grain boundary coating layer may indicate a material applied onto a grain boundary inside the first particle PTC1. The grain boundary coating layer may include carbon and/or a carbon-containing compound. The grain boundary coating layer may further include at least one of a titanium-containing compound and a transition metal-containing compound having an oxidation number of 4.

The inside of the first particle PTC1 may indicate the entire inside portion of the first particle PTC1 excluding the surface of the first particle PTC1. For example, with respect to the surface of the first particle PTC1, the inside of the first particle PTC1 may indicate a region from about 10 nm in depth, or a region from about 10 nm to about 2 $\mu$m in depth.

The first particle PTC1 may further include a grain boundary coating portion and may thereby have greater structural stability and have a uniform coating layer formed on the surface thereof. In addition, the first particle PTC1 may further include a grain boundary coating portion and may thereby have improved electrical conductivity.

The first particle PTC1 may further include carbon derived from the coating layer and/or the grain boundary coating layer described above. The first particle PTC1 may have a carbon element content of about 0.5 wt% to about 10 wt%, about 1 wt% to about 3 wt%, or about 1.5 wt% to about 2.5 wt%. For example, the carbon amount can be measured using Thermogravimetric Analysis (TGA), CHNS Elemental Analysis, or X-ray Photoelectron Spectroscopy (XPS).

The first particle PTC1 may be in the shape of a sphere in which nano-sized first primary particles NNP1 are agglomerated (aggregated). The first primary particles NNP1 may be closely agglomerated (aggregated) and may thereby exhibit the following characteristics. The first particle PTC1 may be in the shape of a sphere or an oval. The first particle PTC1 have an average particle diameter ($D_{50}$) of about 3 $\mu$m to about 7 $\mu$m. The first particle PTC1 may have a porosity of about 20% to about 40%. Porosity (n) may be defined as the pore volume ($V_p$) divided by the total volume ($V_t$) of a particle:

$$n = \frac{V_p}{V_t}$$

For example, porosity may be measured using Mercury Intrusion Porosimetry (MIP), Gas Adsorption (BET Method), or Helium Pycnometry. A Span value of the first particle PTC1, analyzed through a particle size analyzer, may be about 0.3 to about 0.75.

The first particle PTC1 may facilitate the preparation of an electrode plate when in the form of a secondary particle rather than in the form of a single particle. When the particle size is too small, bondability between a current collector and a positive electrode active material is low, which increases resistance. Accordingly, an electrode plate may be hard to process, and a binder may be required in large quantities. As the first particle PTC1 according to an embodiment of the present disclosure has the form of a secondary particle rather than a single particle, the preparation of an electrode plate may thereby be facilitated.

**Second Particle**

The second particle PTC2 includes a layered lithium compound represented by Formula 2: $Li_{a2}Ni_{x2}Co_{y2}B2_{z2}O_{2-c2}$

In Formula 2, $0.8 < a2 \leq 1.2$, $0.9 \leq x2 \leq 1.05$, $0.03 \leq y2 \leq 0.10$, $0.01 \leq z2 \leq 0.05$, and $0 \leq c2 \leq 0.05$ is satisfied, and B2 is at least one element selected from the group consisting of Al and Mn. B2 may be Al.

In one or more embodiments, in Chemical Formula 2, $0.9 \leq x2 \leq 0.94$, $0.05 \leq y2 \leq 0.09$, $0.01 \leq z2 \leq 0.05$, $x2+y2+z2=1$, and $0 \leq c2 \leq 0.05$ may be satisfied.

The second particle PTC2 provides benefits such as high capacity and high energy density.

The second particle PTC2 is a nickel-based active material and may include lithium nickel-based composite oxide. For example, the second particle PTC2 may include a high nickel-based positive electrode active material containing a high content of nickel. The high nickel-based positive electrode active material may achieve high capacity and high performance.

In an embodiment, the second particle PTC2 may include a second coating layer on a surface thereof. The second coating layer may effectively prevent structural collapse caused by repeated charging/discharging. Accordingly, rechargeable batteries may have improved lifetime characteristics.

The second coating layer may include an aluminium-containing compound, a titanium-containing compound, a magnesium-containing compound, a zirconium-containing compound, a molybdenum-containing compound, a niobium-containing compound, or a combination thereof. Metal-containing compounds in the second coating layer may be, for example, metal oxides, metal hydroxides, metal carbonates, composites thereof, or mixtures thereof. The metal-containing compounds may further include other metals or non-metallic elements. For example, the second coating layer may further include lithium, manganese, and/or nickel.

A method of measuring the metal content in the second coating layer of the second particle PTC2 may include performing scanning electron microscopy and energy dispersive X-ray spectroscopy (SEM-EDS) on the second particle PTC2. Through such analysis, the content of aluminium, titanium, magnesium, zirconium, molybdenum, and/or niobium in the second coating layer may be determined. In addition to SEM-EDS, methods of measuring the metal content in the second coating layer may include inductively coupled plasma-mass spectrometry (ICP-MS), inductively coupled plasma optical emission spectroscopy (ICP-OES), and the like.

The second particle PTC2 may have a smaller Brunauer-Emmett-Teller (BET) specific surface area than the first particle PTC1. The second particle PTC2 may have a BET specific surface area of about 0.3 $m^2$/g to about 0.6 $m^2$/g. The BET specific surface area may indicate a surface area per unit mass. When the BET is smaller, a contact surface between a positive electrode active material and a current collector decreases, resulting in reduced resistance and greater bondability with respect to an electrode plate. That is, the positive electrode active material containing the second particles PTC2 having a small BET specific surface area may facilitate preparation of an electrode plate with a small amount of binder. The BET specific surface area can be measured using various methods. For example, it can be determined using BET analyzers such as Micromeritics TriStar, Quantachrome NOVA, or Autosorb IQ.

The second particle PTC2 may be in the form of a single particle and/or a secondary particle. For example, the second particle PTC2 may be present only in the form of a single particle, only in the form of a secondary particle, or in a mixed form of a single particle and a secondary particle. In an embodiment, the second particle PTC2 may have improved density when having a bimodal form in which single particles and secondary particles are mixed. Hereinafter, the second particle PTC2 in the form of a single particle and in the form of a secondary particle will be described with reference to FIGS. 7, 11, and 12.

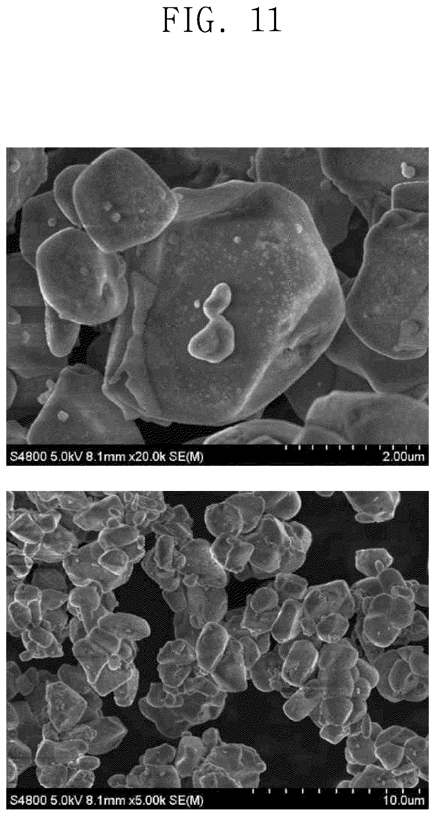

In an embodiment, referring to FIG. 11, the second particle PTC2 may be in the form of a single particle. Herein, the single particle may indicate a single type of particle having no grain boundary inside thereof. The single particle may indicate one single particle morphologically present in an independent phase in which particles are not agglomerated (aggregated) with one another, a particle having a monolith structure, a particle having a one-body structure, or a non-agglomerated (non-aggregated) particle. The single particle may be, for example, a single crystal. Alternatively, the single particle may be a particle containing several crystals. The single particle may be in an isolated form. Alternatively, the single particle may be in the form in which about 2 to about 100 single particles are attached to one another.

When the second particle PTC2 is a single particle, the second particle PTC2 may include at least one second primary particle. In an embodiment, the second particle PTC2 may be in the shape of a sphere or an oval in which second primary particles are agglomerated (aggregated). In another embodiment, the second particle PTC2 may not have a spherical shape and instead have an irregular shape even when the second primary particles were attached. The second particle PTC2, in the form of a single particle in which second primary particles are attached, may be less structured than when it is in the form of a secondary particle. This means the second particle PTC2 may be in a more irregular form.

When the second particle is a single particle, the second particle PTC2 may have an average particle diameter of about 3 $\mu$m to about 10 $\mu$m. The average particle diameter of the second particles PTC2 may be the same as or greater than the above-described average particle diameter of the first particles PTC1. In an embodiment, the average particle diameter may be measured through a particle size analyzer. The average particle diameter may indicate a particle diameter ($D_{50}$) of the particles at an accumulated volume of about 50 vol% in particle size distribution, measured by randomly selecting about 30 second particles PTC2 from an electron micrograph of a positive electrode active material.

When the second particle PTC2 is a single particle, the average size of the second primary particles of the second particle PTC2 may be greater than the average size of the first primary particles NNP1 of the first particle PTC1.

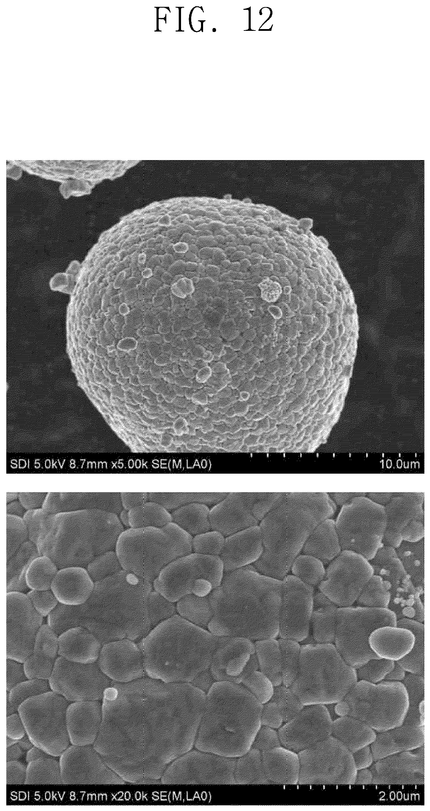

In another embodiment, referring to FIG. 12, the second particle PTC2 may be in the form of a secondary particle. The secondary particle may be in the form of a polycrystal, indicating the form in which at least two second primary particles are agglomerated (aggregated). That is, one second particle PTC2 may include a plurality of second primary particles agglomerated (aggregated) together. The second particle PTC2 may be in the shape of a sphere or an oval.

When the second particle is a secondary particle, the second particle PTC2 may have an average particle diameter of about 10 $\mu$m to about 14 $\mu$m. The average particle diameter of the second particles PTC2 may be greater than the above-described average particle diameter of the first particles PTC1. In an embodiment, the average particle diameter may be measured through a particle size analyzer. The average particle diameter may indicate a particle diameter ($D_{50}$) of the particles at an accumulated volume of about 50 vol% in particle size distribution, measured by randomly selecting about 30 second particles PTC2 from an electron micrograph of a positive electrode active material.

In another embodiment, referring to FIG. 7, the second particle may be present in a bimodal form in which single particles PTC2(SP) and secondary particles PTC2(PC) are mixed. The second particle may have further improved density when in a bimodal form. As shown in FIG. 7, the second particle PTC2(PC), which is a secondary particle, may be in a form in which at least two second primary particles NNP2 are agglomerated (aggregated). The second particle PTC2(SP), which is a single particle, may be in a form including at least one second primary particle. The second particle PTC2(SP), which is a single particle, may have a greater size of second primary particles than the second particle PTC2(PC), which is a secondary particle. The second particle PTC2(SP) may not have a spherical shape but instead have an irregular shape even when the second primary particles were attached.

## Third Particle

The third particle PTC3 includes an olivine structured lithium compound represented by Formula 3: $Li_{a3}Fe_{x3-}B3_{y3}PO_{4-c3}$

In Formula 3, $0.8<a3\leq1.2$, $0.95\leq x3\leq0.999$, $0.001\leq y3\leq0.05$, $x3+y3=1$, and $0\leq c3\leq0.05$ are satisfied, and B3 is at least one of Ti and a transition metal having an oxidation number of 4. B3 may be a dopant with which the third particle PTC3 is doped.

The third particle PTC3 provides benefits including low cost, high structural stability, and excellent lifetime characteristics. In particular, as the third particle PTC3 contains Fe as a component, it is relatively inexpensive, and is subject to relatively small chemical changes, even after repeated charging/discharging due to the structural stability thereof.

A dopant may have the effect of controlling the uniform growth of the third primary particles NNP3 of the third particle PTC3. The dopant may provide rechargeable lithium batteries with improved charging/discharging efficiency, low-temperature characteristics, and lifetime characteristics.

In an embodiment, the third particle PTC3 may include a coating layer on a surface thereof. The coating layer may entirely cover the surface of the third particle PTC3 or may partially cover the surface of the third particle PTC3. For example, the coating layer may include carbon and/or a carbon-containing compound. The third particle PTC3 may be provided with improved structural stability and electrical conductivity through the coating layer.

The coating layer may further include at least one of titanium and a transition metal having an oxidation number of 4. Metal-containing compounds, such as titanium-containing compounds and transition metal-containing compounds having an oxidation number of 4, may be, for example, metal oxides, metal hydroxides, metal carbonates, composites thereof, or mixtures thereof. The metal-containing compounds may further include other metals or non-metallic elements. The metal-containing compounds may further include lithium.

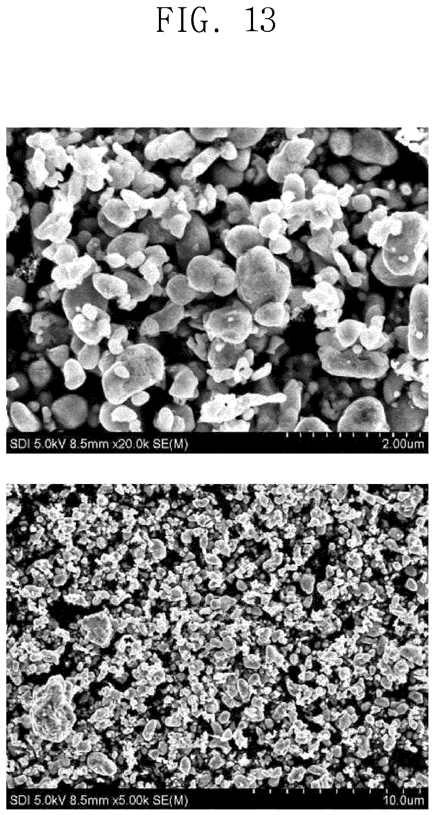

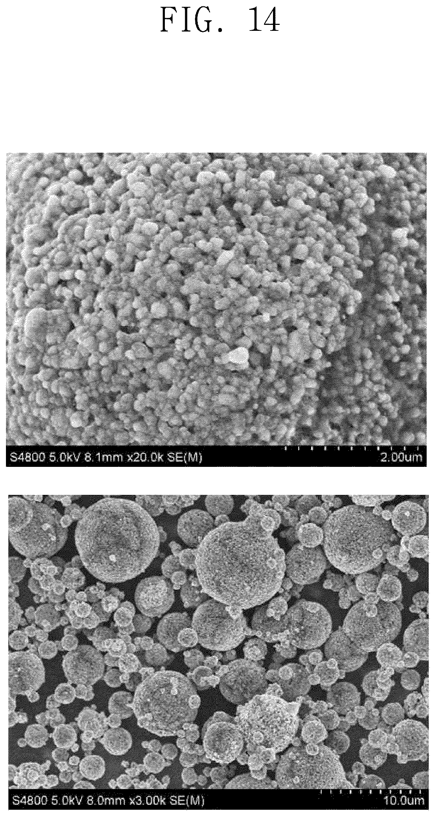

The third particle PTC3 may be in the form of a single particle and/or a secondary particle. For example, the third particle PTC3 may be present only in the form of a single particle, only in the form of a secondary particle, or in a mixed form of a single particle and a secondary particle. In an embodiment, the third particle PTC3 may have further improved density when having a bimodal form in which single particles and secondary particles are mixed. Hereinafter, the third particle PTC3 in the form of a single particle will be described with reference to FIG. 13, and the third particle PTC3 in the form of a secondary particle will be described with reference to FIG. 14.

In an embodiment, referring to FIG. 13, the third particle PTC3 is in the form of a single particle. Herein, the single particle may indicate a single type of particle having no grain boundary inside thereof. The single particle may indicate one single particle morphologically present in an independent phase in which particles are not agglomerated (aggregated) with one another, a particle having a monolith structure, a particle having a one-body structure, or a non-agglomerated (non-aggregated) particle. For example, the single particle may be a single crystal. Alternatively, the single particle may be a particle containing several crystals. The single particle may be in an isolated form. Alternatively, the single particle may be in the form in which about 2 to about 100 single particles are attached together.

When the third particle PTC3 is a single particle, the third particle PTC3 may include at least one third primary particle NNP3. In an embodiment, the third particle PTC3 may be in the shape of a sphere or an oval in which third primary particles NNP3 are agglomerated (aggregated). In another embodiment, the third particle PTC3 may not have a spherical shape but instead have an irregular shape even when the third primary particles NNP3 were attached.

When the third particle PTC3 is a single particle, the third particle PTC3 may be provided in various sizes. For example, the third particle PTC3 may have an average particle diameter of about 0.5 $\mu$m to about 2.5 $\mu$m, or about 1 $\mu$m. The minimum diameter of the third particle PTC3, that is, the size of the third primary particles NNP3, may be about 100 nm to about 500 nm, or about 200 nm to about 300 nm. The third primary particles NNP3 may have a greater average size than the first primary particles NNP1.

In an embodiment, the average particle diameter may be measured through a particle size analyzer. The average particle diameter may indicate the diameter $D_{50}$ of particles at an accumulated volume of about 50 vol% in particle size distribution.

In an embodiment, the minimum diameter, that is, the size of the third primary particles NNP3, may indicate the diameter measured by randomly selecting about 30 primary particles on an electron microscope image of the third particle PTC3.

When the third particle PTC3 is a single particle, the third particle PTC3 may have a porosity of less than about 30%. Porosity may be defined as described earlier in this specification. A Span value of the third particle PTC3, analyzed through a particle size analyzer, may be about 0.3 to about 0.75.

Referring to FIG. 14, in another embodiment the third particle PTC3 may be in the form of a secondary particle. The secondary particle may be in the form of a polycrystal, indicating the form in which at least two third primary particles NNP3 are agglomerated (aggregated). That is, one third particle PTC3 may include a plurality of third primary particles NNP3 agglomerated (aggregated) together. The third particle PTC3 may be in the shape of a sphere or an oval.

When the third particle PTC3 is in the form of a secondary particle, the third particle PTC3 may further include a grain boundary coating layer on a surface of each of the third primary particles NNP3. The grain boundary coating layer may be present inside the third particle PTC3. The grain boundary coating layer may be applied along an interface between the third primary particles NNP3 inside the third particle PTC3. That is, the grain boundary coating layer may indicate a material applied onto a grain boundary inside the third particle PTC3. The grain boundary coating layer may include carbon and/or a carbon-containing compound. The grain boundary coating layer may further include at least one of a titanium-containing compound and a transition metal-containing compound having an oxidation number of 4.

When the third particle PTC3 is a secondary particle, the inside of the third particle PTC3 may indicate the entire inside portion of the third particle PTC3 excluding the surface of the third particle PTC3. For example, with respect to the surface of the third particle PTC3, the inside of the third particle PTC3 may indicate a region from about 10 nm in depth, or from about 10 nm to about 2 $\mu$m in depth.

When the third particle PTC3 is a secondary particle, the third particle PTC3 further includes a grain boundary coating portion and may thereby have greater structural stability and have a uniform coating layer formed on the surface at the grain boundary. In addition, the third particle PTC3 may further include a grain boundary coating portion and may thereby have further improved electrical conductivity.

When the third particle PTC3 is a secondary particle, the third particle PTC3 may further include carbon derived from the coating layer and/or the grain boundary coating layer. The third particle PTC3 may have a carbon element content of about 0.5 wt% to about 10 wt%, about 1 wt% to about 3 wt%, or about 1.5 wt% to about 2.5 wt%. For example, the carbon amount can be measured using Thermogravimetric Analysis (TGA), CHNS Elemental Analysis, or X-ray Photoelectron Spectroscopy (XPS). The third particle PTC3 may have a higher carbon content when in the form of a secondary particle than in the form of a single particle.

When the third particle PTC3 is a secondary particle, the third particle PTC3 may have an average particle diameter of about 2 $\mu$m to about 15 $\mu$m, about 3 $\mu$m to about 10 $\mu$m, or about 3 $\mu$m to about 7 $\mu$m. For example, the third particle PTC3 may have an average particle diameter of about 5 $\mu$m. In an embodiment, the average particle diameter may be measured using a particle size analyzer. The average particle diameter may indicate the diameter $D_{50}$ of particles at an accumulated volume of about 50 vol% in particle size distribution.

When the third particle PTC3 is a secondary particle, the third primary particles NNP3 may have an average size (diameter) of about 200 $\mu$m or less. For example, the third primary particles NNP3 may have an average size of about 10 nm to about 200 nm, about 20 nm to about 200 nm, about 50 nm to about 200 nm, or about 100 nm to about 200 nm. In an embodiment, the average size of the third primary particles NNP3 may indicate a diameter measured by randomly selecting about 30 third primary particles NNP3 on an electron micrograph of a positive electrode active material. The third primary particles NNP3 may be uniform in size.

The third particle PTC3 may have smaller third primary particles NNP3 in size (diameter) when in the form of a secondary particle than in the form of a single particle. For example, the size of the third primary particles NNP3 when the third particle PTC3 is in the form of a secondary particle may be about 100 nm smaller than the size of the third primary particles NNP3 when the third particle PTC3 is in the form of a single particle.

When the third particle PTC3 is a secondary particle, in a case in which the average particle diameter of the first particle PTC3 and the average particle diameters of the third primary particles NNP3 may satisfy the ranges described above, and the size of the third primary particles NNP3 may be uniform, a rechargeable lithium battery containing the third particle PTC3 and the third primary particles NNP3 may have improved charge/discharge capacity and low-temperature capacity.

When the third particle PTC3 is a secondary particle, the third particle PTC3 may have a porosity of about 20% to about 40%. Porosity may be determined as described earlier in this specification. A Span value of the third particle PTC3, analyzed using a particle size analyzer, may be about 0.3 to about 0.75.

### First Active Material Layer

FIG. 7 is an enlarged view showing a first active material layer ATL1 of a positive electrode for a rechargeable lithium battery according to embodiments of the present disclosure.

Referring to FIG. 7, the first active material layer ATL1 includes first particles PTC1, second particles PTC2, and a first functional additive FAD1. The first functional additive FAD1 includes a first binder BND1 and a first conductive material CDM1. Although not shown in the drawing, the second particles PTC2 may be in the form of secondary particles or may be in a bimodal form which is a mixture of single particles and secondary particles.

The first active material layer ATL1 includes a mixture of the first particles PTC1 and the second particles PTC2, thereby making up for low capacity and low energy density, which can be limitations of lithium iron phosphate-based positive electrode active materials. That is, benefits such as the lower production cost of the first particles PTC1 and the high capacity and high energy density of the second particles PTC2 may be achieved together.

The first active material layer ATL1 has a mixture of the first particles PTC1 and the second particles PTC2, which may have a small BET specific surface area, which may be determined as described earlier in this specification. Accordingly, a weight ratio of the first functional additive FAD1 in the first active material layer ATL1 may be reduced. The weight ratio of the first functional additive FAD1 in the first active material layer ATL1 may be defined as a weight of the first functional additive FAD1 with respect to a total weight of the first active material layer. If the particle size is too small, the bondability between the current collector and the positive electrode active material can be reduced, which can increase resistance. As a result, the electrode plate may become difficult to process, and a larger quantity of binder may be required. The first active material layer ATL1 according to embodiments of the present disclosure includes the second particles PTC2, which may have a smaller BET than lithium iron phosphate-based positive electrode active materials. This allows the first active material layer (ATL1) to facilitate the preparation of an electrode plate.

The first active material layer ATL1 may include the first particles PTC1 in the form of secondary particles instead of single particles. Accordingly, a weight ratio of the first functional additive FAD1 in the first active material layer ATL1 may be further reduced. The weight ratio of the first functional additive FAD1 in the first active material layer ATL1 may be, for example, about 2.4 parts by weight to about 4.0 parts by weight with respect to 100 parts by weight of the first active material layer ATL1.

The weight ratio of the first functional additive FAD1 in the first active material layer ATL1 may be lower than or the same as the weight ratio of the second functional additive FAD2 in the second active material layer ATL2 (described below). A ratio of the weight ratio of the second functional additive FAD2 to the weight ratio of the first functional additive FAD1 may be about 1.0 to about 2.6. Alternatively, a ratio of the weight ratio of the second functional additive FAD2 to the weight ratio of the first functional additive FAD1 may be about 1.1 to about 2.6.

The amount of the first binder BND1 may be about 1.2 parts by weight to about 2.0 parts by weight with respect to 100 parts by weight of the first active material layer ATL1. The amount of the first conductive material CDM1 may be about 1.2 parts by weight to about 2.0 parts by weight with respect to 100 parts by weight of the first active material layer ATL1. The amount of the first binder BND1 may be lower than the amount of the second binder BND2 (described below). When the first active material layer ATL1 satisfies the ranges in the content of the first binder and the first conductive material, the capacity and energy density of batteries may be maximized and an electrode plate may be easily processed.

The first binder BND1 may function to attach the positive electrode active material particles PTC1 and PTC2 and also to attach the positive electrode active materials PTC1 and PTC2 to the current collector COL1. Examples of the first binder BND1 are polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon. But embodiments of the present disclosure are not limited to these examples.

The first conductive material CDM1 may be used to impart conductivity to an electrode. Any material that does not cause chemical changes and is an electrically conductive material may be used in the battery. Examples of the first conductive material CDM1 include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof.

The first active material layer ATL1 may be in contact with a surface of the current collector COL1 (FIG. 6).

The first active material layer ATL1 may have a thickness T1. In embodiments, T1 may increase with an increase in weight of the first particles PTC1 and/or the second particles PTC2 included in the first active material layer ATL1.

**Second Active Material Layer**

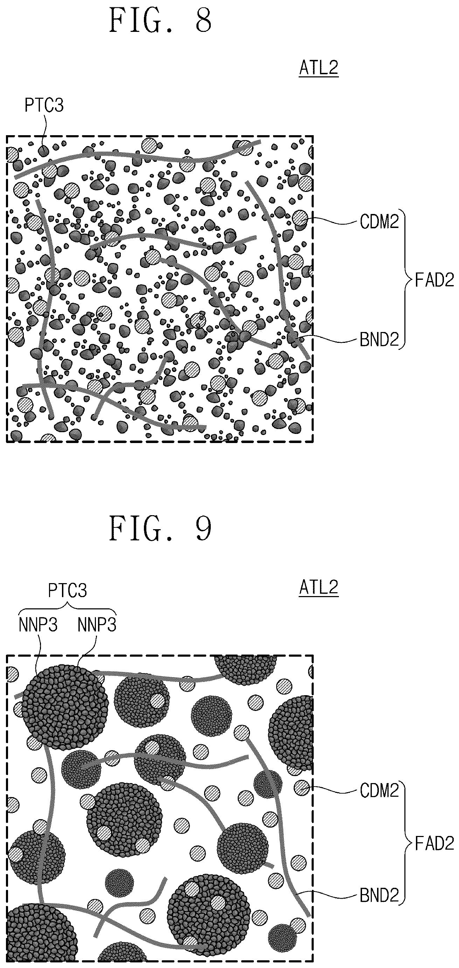

FIGS. 8 and 9 are enlarged views showing a second active material layer ATL2 of a positive electrode for a rechargeable lithium battery according to embodiments of the present disclosure. In particular, FIG. 8 is an enlarged view showing a third particle PTC3 in the form of a single particle, and FIG. 9 is an enlarged view showing a third particle PTC3 in the form of a secondary particle.

Referring to FIGS. 8 and 9, the second active material layer ATL2 includes third particles PTC3 and a second functional additive FAD2. The second functional additive FAD2 includes a second binder BND2 and a second conductive material CDM2. Although not shown in the drawing, the third particles PTC3 may be in a bimodal form which is a mixture of single particles and secondary particles.

The second binder BND2 may function to attach the positive electrode active material particles PTC3 well. Examples of the second binder BND2 are polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon. But embodiments of the present disclosure are not limited to these examples. The second binder BND2 may or may not be the same as the first binder BND1 described above.

The second conductive material CDM2 may be used to impart conductivity to an electrode. Any material that does not cause chemical changes and is electrically conductive material may be used in the battery. Examples of the second conductive material CDM2 may include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof. The second conductive material CDM2 may or may not be the same as the first conductive material CDM1 described above.

The amount of the second binder BND2 may be about 2.0 parts by weight to about 3.0 parts by weight with respect to 100 parts by weight of the second active material layer ATL2. The amount of the second conductive material CDM2 may be about 2.0 parts by weight to about 3.0 parts by weight with respect to 100 parts by weight of the second active material layer ATL2. The amount of the second binder BND2 may be greater than the amount of the first binder BND1 described above. When the second active material layer ATL2 satisfies the ranges with respect to the amount of the second binder and the second conductive material, the capacity of batteries may be maximized and an electrode plate may be easily processed.

The weight ratio of the second functional additive FAD2 in the second active material layer ATL2 may be greater than the weight ratio of the first functional additive FAD1 in the first active material layer ATL1. The weight ratio of the second functional additive FAD2 in the second active material layer ATL2 may be about 4.0 parts by weight to about 6.0 parts by weight with respect to 100 parts by weight of the second active material layer ATL2.

A ratio of the weight ratio of the second functional additive FAD2 to the weight ratio of the first functional additive FAD1 (weight ratio of the second functional additive/weight ratio of the first functional additive) may be about 1.0 to about 2.6. Alternatively, a ratio of the weight ratio of the second functional additive FAD2 to the weight ratio of the first functional additive FAD1 may be about 1.1 to about 2.6. When the ratio of the weight ratio of the second functional additive FAD2 to the weight ratio of the first functional additive FAD1 satisfies these ranges, the positive electrode active material layer AML1 may have improved bondability with respect to the current collector COL1. Accordingly, the capacity and energy density of batteries may be maximized and an electrode plate may be easily processed.

The second active material layer ATL2 may be applied to a surface of the first active material layer ATL1. The surface of the first active material layer ATL1 may be a surface that is not in contact with the current collector COL1. For example, the current collector COL1, the first active material layer ATL1, and the second active material layer ATL2 may be sequentially disposed, as illustrated in FIG. 6.

The second active material layer ATL2 may have a thickness T2. In an embodiment, T2 may increase with an increase in weight of the third particles PTC3 included in the second active material layer ATL2.

## Positive Electrode including First Active Material Layer and Second Active Material Layer

FIG. 6 is a cross-sectional view showing a positive electrode for a rechargeable lithium battery according to embodiments of the present disclosure. Referring to FIG. 6, as described above, the positive electrode 10 includes a current collector COL1 and a positive electrode active material layer AML1. The positive electrode active material layer AML1 is provided on the current collector COL1.

The positive electrode active material layer AML1 includes positive electrode active materials PTC1, PTC2, and PTC3. The positive electrode active material layer AML1 may contain about 90 wt% to about 99 wt% of the positive electrode active materials PTC1, PTC2, and PTC3 with respect to 100 wt% of the positive electrode active material layer AML1.

The positive electrode active material layer AML1 includes binders BND1 and BND2 and conductive materials CDM1 and CDM2. The positive electrode active material layer AML1 may contain about 0.5 wt% to about 5 wt% of each of the binders BND1 and BND2 and the conductive materials CDM1 and CDM2 with respect to 100 wt% of the positive electrode active material layer AML1.

The positive electrode active material layer AML1 includes a first active material layer ATL1 and a second active material layer ATL2. Because the first active material layer ATL1 may be placed underneath the second active material layer ATL2, the positive electrode active material layer AML1 may contain a large amount of nano-sized olivine-based compound while increasing the bondability to the current collector. As a result, the electrode plate can be easily manufactured and the resistance in the electrode plate can be reduced. Ultimately, this leads to a lithium secondary battery with excellent performance.

The first active material layer ATL1 may have a thickness T1. In an embodiment, T1 may increase with an increase in weight of the first particles PTC1 and/or the second particles PTC2 included in the first active material layer ATL1. The second active material layer ATL2 may have a thickness T2. In an embodiment, T2 may increase with an increase in weight of the third particles PTC3 included in the second active material layer ATL2.

A thickness ratio T1:T2 of the first active material layer ATL1 and the second active material layer ATL2 may be about 3:7 to about 7:3. For example, the thickness ratio T1:T2 of the first active material layer ATL1 and the second active material layer ATL2 may be about 5:5. When the thickness ratio T1:T2 of the first active material layer ATL1 and the second active material layer ATL2 is in these ranges, the positive electrode active material layer AML1 has improved bondability with respect to the current collector COL1. Accordingly, the capacity and energy density of batteries may be maximized and an electrode plate may be easily processed.

In an embodiment of the present disclosure, as shown in FIGS. 6 and 7, the first active material layer ATL1 is positioned between the current collector COL1 and the second active material layer ATL2. The first active material layer ATL1 contains the second particles PTC2 and the first particles PTC1 in an appropriate ratio. The configuration may improve the bondability of the electrode plate and may reduce the requirement for the binder BND. Furthermore, it may lead to improvements in capacity, density characteristics, high temperature stability, and lifetime characteristics. Moreover, the inclusion of the second particles PTC2 in a bimodal form, comprising a mixture of single particles and secondary particles, further enhances density.

The first particles PTC1 amount to about 20 wt% to about 40 wt%, with respect to a total amount of the first particles PTC1, the second particles PTC2, and the third particles PTC3 included in the first active material layer ATL1 and the second active material layer ATL2. For example, with respect to a total amount of the first particles PTC1, the second particles PTC2, and the third particles PTC3 included in the first active material layer ATL1 and the second active material layer ATL2, the first particles PTC1 amount to about 35 wt%.

The second particles PTC2 amount to about 10 wt% to about 30 wt%, with respect to a total amount of the first particles PTC1, the second particles PTC2, and the third particles PTC3 included in the first active material layer ATL1 and the second active material layer ATL2. For example, with respect to a total amount of the first particles PTC1, the second particles PTC2, and the third particles PTC3 included in the first active material layer ATL1 and the second active material layer ATL2, the second particles PTC2 amount to about 20 wt% to about 30 wt%.

The third particles PTC3 amount to about 30 wt% to about 50 wt%, with respect to a total amount of the first particles PTC1, the second particles PTC2, and the third particles PTC3 included in the first active material layer ATL1 and the second active material layer ATL2. For example, with respect to a total amount of the first particles PTC1, the second particles PTC2, and the third particles PTC3 included in the first active material layer ATL1 and the second active material layer ATL2, the third particle PTC3 amounts to about 35 wt%.

The second particles PTC2 amount to about 30 wt% to about 60 wt%, with respect to a total amount of the first particles PTC1 and the second particles PTC2 included in the first active material layer ATL1. For example, with respect to a total amount of the first particles PTC1 and the second particles PTC2 included in the first active material layer ATL1, the second particles PTC2 amount to about 45 wt% to about 50 wt%.

When the amounts of the first particles PTC1, the second particles PTC2, and the third particles PTC3 satisfy the ranges described above, the positive electrode active material layer AML1 may have improved bondability with respect to the current collector COL1. Accordingly, a rechargeable lithium battery having reduced resistance may be provided. In addition, when the amounts of the first particles PTC1, the second particles PTC2, and the third particles PTC3 satisfy the ranges described above, a rechargeable lithium battery having excellent performance may be provided.

Preparation Examples, Examples, and Comparative Examples of the present disclosure will be described. However, the following Examples are presented only as embodiments of the present disclosure, and the present disclosure is not limited by the following Examples.

### Preparation Example 1: Preparation of First Particles

An iron phosphate precursor ($Fe_1PO_4$), lithium carbonate, and titanium dioxide were mixed at a molar ratio of Fe:Li:Ti of 1:1.03:0.004. 10 wt% of glucose was further added to the mixture. The slurry mixture was spray-dried and evaporated to dryness at a spray pressure of 0.5 MPa and a temperature of 230 °C. The dried mixture was fired at 750 °C for 10 hours in a nitrogen atmosphere to obtain first particles in the form of secondary particles. The first particles had an average particle diameter ($D_{50}$) of about 3 $\mu$m to about 7 $\mu$m. The first primary particles of the first particles had a size (e.g. average particle diameter) of 100 nm to 200 nm.

### Preparation Example 2: Preparation of Second Particles (Single Particle Form)

$Ni_{0.92}Co_{0.07}Al_{0.01}(OH)_2$ and LiOH were mixed at a molar ratio of (Ni+Co+Al):Li of 1:1.05 and the mixture was subjected to a first heat treatment at 810 °C for 8 hours in an oxygen atmosphere to obtain an oxide having a composition of $Li_{1.05}Ni_{0.92}Co_{0.07}Al_{0.01}O_2$ and an average particle diameter ($D_{50}$) of about 4 $\mu$m. Aluminium oxide was added to the oxide and then the mixture was subjected to a second heat treatment at 740 °C for 8 hours in an oxygen atmosphere to prepare a positive electrode active material. The second particles were represented by Formula of $LiNi_{0.92}Co_{0.07}Al_{0.01}O_2$.

### Preparation Example 3-1: Preparation of Third Particles (Single Particle Form)

An iron phosphate precursor ($Fe_1PO_4$), lithium carbonate, and titanium dioxide were mixed at a molar ratio of Fe:Li:Ti of 1:1.03:0.004. 10 wt% of glucose was further added to the mixture. The mixture was subjected to a wet grinding process through ball milling. The mixture was evaporated to dryness on a heating tray and then placed and dried in a vacuum oven at 85 °C for 4 hours. The dried mixture was fired at 750 °C for 10 hours in a nitrogen atmosphere. The fired product was ground at a rotation speed of 8000 rpm to obtain third particles in the form of single particles. The third particles had an average particle diameter of 0.5 $\mu$m to 2.5 $\mu$m. Third primary particles of the third particles had a size (average particle diameter) of 200 nm to 300 nm.

### Preparation Example 3-2: Preparation of Third Particles (Secondary Particle Form)

An iron phosphate precursor ($Fe_1PO_4$), lithium carbonate, and titanium dioxide were mixed at a molar ratio of Fe:Li:Ti of 1:1.03:0.004. 10 wt% of glucose was further added to the mixture. The slurry mixture was spray-dried and evaporated to dryness at a spray pressure of 0.5 MPa and a temperature of 230 °C. The dried mixture was fired at 750 °C for 10 hours in a nitrogen atmosphere to obtain third particles in the form of secondary particles. The third particles had an average particle diameter ($D_{50}$) of about 3 $\mu$m to about 7 $\mu$m. Third primary particles of the third particles had a size (average particle diameter) of 100 nm to 200 nm.

**Example 1: Preparation of Positive Electrode including First Active Material Layer and Second Active Material Layer**

The first particles of Preparation Example 1 and the second particles of Preparation Example 2 were dispersed in N-methylpyrrolidone along with a conductive material (carbon black) and a binder (polyvinylidene fluoride) to prepare a first positive electrode active material slurry. The third particles of Preparation Example 3-1 were dispersed in N-methylpyrrolidone along with a conductive material (carbon black) and a binder (polyvinylidene fluoride) to prepare a second positive electrode active material slurry.

The first positive electrode active material slurry was applied onto a positive electrode current collector and dried to form a first active material layer. The second positive electrode active material slurry was applied onto the first active material layer and dried to form a second active material layer.

An active material layer was thereby formed such that the first particles, the second particles, and the third particles in the double layer positive electrode were present at a weight ratio of 35:30:35. Through a roll press, a positive electrode in which the current collector, the first active material layer, and the second active material layer were stacked in this order was prepared.

**Example 2**

A positive electrode was prepared in the same manner as in Example 1, except that the third particles in the form of a secondary particles of Preparation Example 3-2 were used instead of the third particles in the form of a single particle of Preparation Example 3-1.

**Example 3**

A positive electrode was prepared in the same manner as in Example 1, except that the second particles in a bimodal form were used instead of the second particles in single particle form from Preparation Example 2.

The method for preparing second particles in a bimodal form was as follows. $Ni_{0.92}Co_{0.07}Al_{0.01}(OH)_2$ and LiOH were mixed at a molar ratio of (Ni+Co+Al):Li of 1:1.05, and a flux was added to the mixture. The mixture was then subjected to a first heat treatment at 750 °C for 15 hours in an oxygen atmosphere to obtain first heat-treated particles. The first heat-treated particles were milled using a jet mill at a pressure of 3 bar and subsequently washed with distilled water. After washing, aluminum oxide was added to the particles, and the mixture was dried at 150 °C for 12 hours. The dried mixture was then subjected to a second heat treatment at 700 °C for 15 hours in an oxygen atmosphere to prepare the second particle in the form of a secondary particle. The second particles in the form of secondary particles and the second particles in the form of primary particles from Preparation Example 2 were mixed at a weight ratio of 2:8 to prepare a bi-modal second particle.

**Comparative Example 1: Preparation of Positive Electrode including One Active Material Layer**

The first particles of Preparation Example 1 and the second particles of Preparation Example 2 were mixed at a weight ratio of 30:70 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer positive electrode.

**Comparative Example 2**

A positive electrode was prepared in the same manner as in Comparative Example 1, except that the first particles of Preparation Example 1 and the second particles of Preparation Example 2 were mixed at a weight ratio of 40:60.

**Comparative Example 3**

A positive electrode was prepared in the same manner as in Comparative Example 1, except that the first particles of Preparation Example 1 and the second particles of Preparation Example 2 were mixed at a weight ratio of 50:50.

**Comparative Example 4**

A positive electrode was prepared in the same manner as in Comparative Example 1, except that the first particles of Preparation Example 1 and the second particles of Preparation Example 2 were mixed at a weight ratio of 60:40.

## Comparative Example 5

A positive electrode was prepared in the same manner as in Comparative Example 1, except that the first particles of Preparation Example 1 and the second particles of Preparation Example 2 were mixed at a weight ratio of 70:30.

## Comparative Example 6

A positive electrode was prepared in the same manner as in Comparative Example 1, except that the first particles of Preparation Example 1 and the second particles of Preparation Example 2 were mixed at a weight ratio of 80:20.

## Comparative Example 7

A positive electrode was prepared in the same manner as in Comparative Example 1, except that the first particles of Preparation Example 1 and the second particles of Preparation Example 2 were mixed at a weight ratio of 90: 10.

## Comparative Example 8

The first particles of Preparation Example 1, the second particles of Preparation Example 2, and the third particles of Preparation Example 3-1 were mixed at a weight ratio of 35:30:35 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer positive electrode.

## Reference Example 1

A positive electrode was prepared in the same manner as in Example 1, except that the weights of the first binder, the first conductive material, the second binder, and the second conductive material were changed. The weight change was regulated such that a ratio of the weight ratio of the second functional additive to the weight ratio of the first functional additive was 0.83.

## Reference Example 2

A positive electrode was prepared in the same manner as in Example 1, except that the weights of the first binder, the first conductive material, the second binder, and the second conductive material were changed. The weight change was regulated such that a ratio of the weight ratio of the second functional additive to the weight ratio of the first functional additive was 3.33.

## Comparative Example 11

The first particles in the form of a secondary particles (Preparation Example 1), a conductive material (carbon black), and a binder (polyvinylidene fluoride) were dispersed together in N-methylpyrrolidone to prepare a positive electrode active material slurry. The positive electrode active material slurry was applied onto a positive electrode current collector and dried to prepare a single layer positive electrode.

## Comparative Example 12

The first particles in the form of single particles, a conductive material (carbon black), and a binder (polyvinylidene fluoride) were dispersed together in N-methylpyrrolidone to prepare a positive electrode active material slurry. The positive electrode active material slurry was applied onto a positive electrode current collector and dried to prepare a single layer positive electrode.

**Preparation of Rechargeable Lithium Battery**

A 2032 type coin half-cell was prepared using the prepared positive electrode and a lithium metal electrode as a negative counter electrode. A separator with a thickness of about 16 $\mu$m in the form of a porous polyethylene (PE) film was placed between the positive electrode and the lithium metal counter electrode, and an electrolyte solution was injected to prepare a rechargeable lithium battery. As an electrolyte, an electrolyte solution obtained by mixing 1.3 M LiPF$_6$ with a mixed solvent containing ethylene carbonate (EC), ethylmethyl carbonate (EMC), and dimethyl carbonate (DMC) in a volume ratio of 3:4:3 was used.

**Evaluation Example 1: Analysis of Positive Electrode Active Material Surface**

SEM images for each of the first particles, the second particles in the form of single particles, the third particles in the form of single particles, and the third particles in the form of secondary particles prepared in Preparation Examples 1 to 3-2 are shown in FIGS. 10, 11, 13, and 14 respectively. SEM images for the second particles in the form of secondary particles are shown in FIG. 12.
Referring to FIG. 10, it is seen that the first particles according to Preparation Example 1 of the present disclosure are in the form of spherical secondary particles in which nano-sized fine first primary particles are agglomerated (aggregated).
Referring to FIG. 11, it is seen that the second particles according to Preparation Example 2 of the present disclosure are in the form of micro-sized single particles. Referring to FIGS. 10 and 11, it is seen that when the second particles are in the form of single particles, the average particle diameter (D$_{50}$) of the second particles is the same or greater as/than the average particle diameter (D$_{50}$) of the first particles.
Referring to FIG. 12, it is seen that the second particles according to an embodiment of the present disclosure are in the form of spherical secondary particles in which nano-sized fine second primary particles are agglomerated (aggregated).
Referring to FIG. 13, it is seen that the third particles according to Preparation Example 3-1 of the present disclosure are in the form of single particles.
Referring to FIG. 14, it is seen that the third particles according to Preparation Example 3-2 of the present disclosure are in the form of spherical secondary particles in which nano-sized fine third primary particles are agglomerated (aggregated). Referring to FIGS. 13 and 14, it is determined that the third particles have smaller third primary particles in size when in the form of secondary particles than in the form of single particles.

**Evaluation Example 2: Evaluation of Active Material**

Pellet density (PD) of the positive electrode active materials of Examples and Comparative Examples was measured, and the results are shown in Table 1 below.

Table 1

| Item | Single layer/ Double layer | Weight ratio | | | | Pellet density (g/cc) |
|---|---|---|---|---|---|---|
| | | First particle (wt%) | Second particle (wt%) | Third particle (wt%) | | |
| | | | | Single particle | Secondary particle | |
| Example 1 | Double layer | 35 | 30 | 35 | - | 2.63 |
| Example 2 | Double layer | 35 | 30 | - | 35 | 2.62 |
| Example 3 | Double layer | 35 | 30* | - | 35 | 2.85 |
| Comparative Example 1 | Single layer | 30 | 70 | - | - | 2.91 |
| Comparative Example 2 | Single layer | 40 | 60 | - | - | 2.84 |
| Comparative Example 3 | Single layer | 50 | 50 | - | - | 2.78 |
| Comparative Example 4 | Single layer | 60 | 40 | - | - | 2.72 |
| Comparative Example 5 | Single layer | 70 | 30 | - | - | 2.65 |
| Comparative Example 6 | Single layer | 80 | 20 | - | - | 2.59 |
| Comparative Example 7 | Single layer | 90 | 10 | - | - | 2.52 |

(continued)

| Item | Single layer/ Double layer | Weight ratio | | | | Pellet density (g/cc) |
|---|---|---|---|---|---|---|
| | | First particle (wt%) | Second particle (wt%) | Third particle (wt%) | | |
| | | | | Single particle | Secondary particle | |
| Comparative Example 8 | Single layer | 35 | 30 | 35 | - | 2.64 |
| * Note that the second particles in a bimodal form were used. | | | | | | |

## Evaluation Example 3: Evaluation of Battery Properties

Characteristics of rechargeable lithium batteries prepared using positive electrode active materials each from the Examples and the Comparative Examples were evaluated.

For initial charging/discharging, the rechargeable lithium batteries were initially charged at a constant current of 0.2 C and, after 10 minutes of rest, discharged up to 3.0 V at a constant current of 0.2 C, and then the average voltage was evaluated. Thereafter, the charging/discharging was repeated 50 times at 45 °C and 1.0 C/1.0 C. Coin cells were additionally prepared and then the batteries were initially charged at a constant current of 0.2 C and after 10 minutes of rest, discharged up to 3.0 V at a constant current of 0.2 C and additionally charged, and then measured at - 20 °C for capacity. The resulting battery properties are shown in Tables 2 and 3 below.

Then, the cells were charged and discharged at a rate of 0.2 C/0.2 C within a voltage range of 3.0 V to 4.45 V at 25 °C to calculate energy density. The energy density was obtained by using a calculation equation of {average driving voltage (V) x capacity (Ah) / cell weight (kg)}, wherein the capacity was calculated by multiplying a positive electrode weight (g) and discharge capacity (mAh/g).

The weight of the second particles in Table 2 indicates the weight of the second particles with respect to the total weight of the first, second and third particles.

Table 2

| Item | Single layer/ Double layer | Weight of second particle (wt%) | Battery properties | | | | | | |
|---|---|---|---|---|---|---|---|---|---|
| | | | Charge at 0.2 C | Discharge at 0.2 C | Efficiency at 0.2 C (%) | Capacity at -20 °C (mAh/g) | Average voltage (V) | Lifetime at 1 C (%, @50cy) | Energy density (Wh/kg) |
| Example 1 | Double layer | 30 | 190.3 | 178.1 | 93.60 | 92 | 3.32 | 99.1 | 578 |
| Example 2 | Double layer | 30 | 190.8 | 178.8 | 93.70 | 98 | 3.32 | 99.6 | 580 |
| Example 3 | Double layer | 30* | 190.1 | 175.2 | 92.16 | 84 | 3.32 | 98.6 | 577 |
| Comparative Example 1 | Single layer | 70 | 220.7 | 203.0 | 92.00 | 97 | 3.48 | 98.1 | 706 |
| Comparative Example 2 | Single layer | 60 | 213.0 | 197.0 | 92.50 | 96 | 3.44 | 98.4 | 678 |
| Comparative Example 3 | Single layer | 50 | 205.2 | 191.0 | 93.10 | 96 | 3.40 | 98.7 | 649 |
| Comparative Example 4 | Single layer | 40 | 197.4 | 184.9 | 93.70 | 95 | 3.36 | 99.0 | 607 |
| Comparative Example 5 | Single layer | 30 | 189.7 | 178.9 | 94.30 | 94 | 3.32 | 99.3 | 576 |
| Comparative Example 6 | Single layer | 20 | 181.9 | 172.9 | 95.10 | 93 | 3.28 | 99.6 | 546 |
| Comparative Example 7 | Single layer | 10 | 174.2 | 166.9 | 95.80 | 92 | 3.24 | 99.9 | 516 |

(continued)

| Item | Single layer/ Double layer | Weight of second particle (wt%) | Battery properties | | | | | | |
|---|---|---|---|---|---|---|---|---|---|
| | | | Charge at 0.2 C | Discharge at 0.2 C | Efficiency at 0.2 C (%) | Capacity at -20 °C (mAh/g) | Average voltage (V) | Lifetime at 1 C (%, @50cy) | Energy density (Wh/kg) |
| Comparative Example 8 | Single layer | 30 | 189.8 | 177.3 | 93.40 | 81 | 3.32 | 98.4 | 577 |
| * Note that second particles in a bimodal form were used. | | | | | | | | | |

Table 3

| Item | Single layer/ Double layer | First Particle (form) | Battery properties | | | | | | | |
|---|---|---|---|---|---|---|---|---|---|---|
| | | | Charge at 0.2 C | Discharge at 0.2 C | Efficiency at 0.2 C (%) | Capacity at -20 °C (mAh/g) | Average voltage (V) | Lifetime at 1 C (%, @50cy) | DCIR, SOC50 (Ω, 0.2 C/1.0 C) | Energy density (Wh/kg) |
| Comparative Example 11 | Single layer | Secondary particle | 166.4 | 160.9 | 96.7 | 91 | 3.20 | 100.0 | 17.3 | 471 |
| Comparative Example 12 | Single layer | Single particle | 166.8 | 156.1 | 93.6 | 56 | 3.20 | 97.5 | 22.0 | 457 |

Referring to Table 2, it is seen that the rechargeable lithium batteries including the positive electrodes according to Examples 1, 2, and 3 have the same or greater level of efficiency, capacity, voltage, lifetime, and energy density as/than the rechargeable lithium battery including the positive electrode according to Comparative Example 8. That is, the performance of a battery including a double layered positive electrode active material is superior to that of a battery including only a single layered positive electrode active material, even when the mixing ratio of the first, second, and third particles is the same.

Referring to Table 3, it is seen that the rechargeable lithium battery including the positive electrode according to Comparative Example 11 has greater charge/discharge capacity, efficiency, low-temperature capacity, resistance, and energy density than the rechargeable lithium battery including the positive electrode according to Comparative Example 12. In particular, the resistance is significantly reduced. That is, when the first particles are included in the form of secondary particles rather than in the form of single particles, resistance is significantly reduced.

## Evaluation Example 4: Evaluation of Resistance and Bondability

Resistance and bondability were evaluated for rechargeable lithium batteries prepared using positive electrode active materials each from the Examples and the Comparative Examples, and the results are shown in Table 4 below.

For initial charging/discharging, the rechargeable lithium batteries were initially charged at a constant current of 0.2 C and, after 10 minutes of rest, discharged up to 3.0 V at a constant current of 0.2 C, and then the average voltage was evaluated. The rechargeable lithium batteries were discharged at 1.0 C for 1 second at SOC50 at a constant current of 0.2 C and then discharged at a constant current of 0.2 C to calculate direct current internal resistance (DCIR).

The amount of the first functional additive and the second functional additive and the ratio of the weight ratio of the second functional additive to the weight ratio of the first functional additive (weight ratio of FAD2/FAD1) were calculated.

Table 4

| Item | Single layer/ Double layer | Amount of first functional additive FAD1 in first active material layer (parts by weight/100 parts by weight of first active material layer) | | Amount of second functional additive FAD2 in second active material layer (Parts by weight/100 parts by weight of second active material layer) | | Weight ratio of FAD2/FAD1 | DCIR, SOC50 ($\Omega$, 0.2 C/1.0 C) |
|---|---|---|---|---|---|---|---|
| | | First binder | First conductive material | Second binder | Second conductive material | | |
| Example 1 | Double layer | 1.2 | 1.2 | 3.0 | 3.0 | 2.5 | 13.9 |
| Example 2 | Double layer | 1.2 | 1.2 | 2.0 | 2.0 | 1.7 | 11.9 |
| Comparative Example 1 | Single layer | 2.0 | 2.0 | - | - | - | 8.3 |
| Comparative Example 2 | Single layer | 2.0 | 2.0 | - | - | - | 9.6 |
| Comparative Example 3 | Single layer | 2.0 | 2.0 | - | - | - | 10.9 |
| Comparative Example 4 | Single layer | 2.0 | 2.0 | - | - | - | 12.2 |
| Comparative Example 5 | Single layer | 2.0 | 2.0 | - | - | - | 13.5 |
| Comparative Example 6 | Single layer | 2.0 | 2.0 | - | - | - | 14.7 |
| Comparative Example 7 | Single layer | 2.0 | 2.0 | - | - | - | 16.0 |
| Comparative Example 8 | Single layer | 2.0 | 2.0 | - | - | - | 15.1 |

(continued)

| Item | Single layer/ Double layer | Amount of first functional additive FAD1 in first active material layer (parts by weight/100 parts by weight of first active material layer) | | Amount of second functional additive FAD2 in second active material layer (Parts by weight/100 parts by weight of second active material layer) | | Weight ratio of FAD2/FAD1 | DCIR, SOC50 ($\Omega$, 0.2 C/1.0 C) |
|---|---|---|---|---|---|---|---|
| | | First binder | First conductive material | Second binder | Second conductive material | | |
| Reference Example 1 | Double layer | 1.2 | 1.2 | 1.0 | 1.0 | 0.83 | 14.2 |
| Reference Example 2 | Double layer | 1.2 | 1.2 | 4.0 | 4.0 | 3.33 | 18.2 |
| Comparative Example 11 | Single layer | 2.0 | 2.0 | - | - | - | 17.3 |
| Comparative Example 12 | Single layer | 3.0 | 3.0 | - | - | - | 22.0 |

Referring to Table 4, it is seen that the rechargeable lithium batteries including the positive electrodes according to Examples 1 and 2 have a lower resistance (DCIR) than the rechargeable lithium batteries including the positive electrodes according to Reference Examples 9 and 10. That is, when the ratio of the weight ratio of the second functional additive to the weight ratio of the first functional additive (weight ratio of FAD2/FAD1) satisfies the ranges targeted by the present disclosure, bondability with a current collector may be increased.

A positive electrode according to the present disclosure includes first particles and third particles each having an olivine structure, and may thus have lower production cost and improved average voltage.

A positive electrode according to the present disclosure includes second particles having a layered structure, and may thus have improved capacity and energy density.

A positive electrode according to the present disclosure has second particles and first particles mixed and provided in a first active material layer, and may thus allow an electrode plate to be easily prepared.

A positive electrode according to the present disclosure has first particles, second particles, and third particles mixed in an optimal ratio and used in a double layer structure, and may thus allow both battery characteristics to be improved and an electrode plate to be easily prepared.

Certain embodiments are set out in the following clauses:

Clause 1. A positive electrode for a rechargeable lithium battery, the positive electrode comprising: a current collector; a first active material layer on the current collector; and a second active material layer on the first active material layer,

wherein the first active material layer includes first particles containing are an olivine structured compound represented by Formula 1, second particles containing a layered compound represented by Formula 2, a first conductive material, and a first binder,

wherein the second active material layer includes third particles containing an olivine structured compound represented by Formula 3, a second conductive material, and a second binder,

wherein the first particles are in the form of secondary particles in which a plurality of primary particles are agglomerated (aggregated), wherein the first binder and the first conductive material constitute a first functional additive, wherein the second binder and the second conductive material constitute a second functional additive, and wherein a weight ratio of the first functional additive in the first active material layer is lower than a weight ratio of the second functional additive in the second active material layer,

wherein Formula 1 is:

$$Li_{a1}Fe_{x1}B1_{y1}PO_{4-c1}$$

wherein in Formula 1 above, $0.8 < a1 \leq 1.2$, $0.95 \leq x1 \leq 0.999$, $0.001 \leq y1 \leq 0.05$, $x1 + y1 = 1$, and $0 \leq c1 \leq 0.05$, and B1 is at least one element selected from the group consisting of Ti and a transition metal having an oxidation number of 4, wherein Formula 2 is:

$$Li_{a2}Ni_{x2}Co_{y2}B2_{z2}O_{2-c2}$$

wherein in Formula 2 above, $0.8 < a2 \leq 1.2$, $0.9 \leq x2 \leq 1.05$, $0.03 \leq y2 \leq 0.10$, $0.01 \leq z2 \leq 0.05$, and $0 \leq c2 \leq 0.05$, and B2 is at least one element selected from the group consisting of Al and Mn, and
wherein Formula 3 is:

$$Li_{a3} Fe_{x3}B3_{y3}PO_{4-c3}$$

wherein in Formula 3 above, $0.8 < a3 \leq 1.2$, $0.95 \leq x3 \leq 0.999$, $0.001 \leq y3 \leq 0.05$, $x3+y3=1$, and $0 \leq c3 \leq 0.05$, and B3 is at least one element selected from the group consisting of Ti and a transition metal having an oxidation number of 4.

Clause 2. The positive electrode for a rechargeable lithium battery of Clause 1, wherein a thickness ratio of the first active material layer and the second active material layer is about 3:7 to about 7:3.

Clause 3. The positive electrode for a rechargeable lithium battery of Clause 1 or Clause 2, wherein with respect to a total weight of the first particles, the second particles, and the thirds particle included in the first active material layer and the second active material layer, the second particles amount to about 10 wt% to about 30 wt%.

Clause 4. The positive electrode for a rechargeable lithium battery of any preceding Clause, wherein an amount of the first binder is about 1.2 parts by weight to about 2.0 parts by weight with respect to 100 parts by weight of the first active material layer, and wherein an amount of the second binder is about 2.0 parts by weight to about 3.0 parts by weight with respect to 100 parts by weight of the second active material layer.

Clause 5. A rechargeable lithium battery comprising the positive electrode according to any preceding Clause.

## Claims

1. A positive electrode for a rechargeable lithium battery, the positive electrode comprising:

   a current collector;
   a first active material layer on the current collector; and
   a second active material layer on the first active material layer,
   wherein the first active material layer includes first particles that are olivine structured compounds represented by Formula 1, second particles that are layered compounds represented by Formula 2, a first conductive material, and a first binder,
   wherein the second active material layer includes third particles that are olivine structured compounds represented by Formula 3, a second conductive material, and a second binder,
   wherein the first particles are in the form of secondary particles in which a plurality of first primary particles are agglomerated,
   wherein the first particles have an average diameter ($D_{50}$) of about 3 $\mu$m to about 7 $\mu$m,
   wherein the second particles have an average diameter ($D_{50}$) of about 3 $\mu$m to about 14 $\mu$m,
   wherein Formula 1 is:

   $$LI_{a1}Fe_{x1}B1_{y1}PO_{4-c1}$$

   with $0.8 < a1 \leq 1.2$, $0.95 \leq x1 \leq 0.999$, $0.001 \leq y1 \leq 0.05$, $x1+y1=1$, and $0 \leq c1 \leq 0.05$, and B1 is at least one of Ti and a transition metal having an oxidation number of 4,
   wherein Formula 2 is:

   $$Li_{a2}Ni_{x2}Co_{y2}B2_{z2}O_{2-c2}$$

   with $0.8 < a2 \leq 1.2$, $0.9 \leq x2 \leq 1.05$, $0.03 \leq y2 \leq 0.10$, $0.01 \leq z2 \leq 0.05$, and $0 \leq c2 \leq 0.05$, and B2 is at least one of Al and Mn, and
   wherein Formula 3 is:

   $$Li_{a3}Fe_{x3}B3_{y3}PO_{4-c3}$$

   with $0.8 < a3 \leq 1.2$, $0.95 \leq x3 \leq 0.999$, $0.001 \leq y3 \leq 0.05$, $x3+y3=1$, and $0 \leq c3 \leq 0.05$ are satisfied, and B3 is at least one of Ti and a transition metal having an oxidation number of 4.

2. The positive electrode for a rechargeable lithium battery of claim 1, wherein B2 in Formula 2 is Al, the second particles are in the form of single particles, and the second particles have an average diameter ($D_{50}$) of about 3 $\mu$m to about 10 $\mu$m.

3. The positive electrode for a rechargeable lithium battery of claim 1, wherein B2 in Formula 2 is Al, the second particles are in the form of secondary particles, with a plurality of second primary particles being agglomerated to form each of the secondary particles, and the second particles have an average diameter ($D_{50}$) of about 10 $\mu$m to about 14 $\mu$m.

4. The positive electrode for a rechargeable lithium battery of any preceding claim, wherein the third particles are in the form of secondary particles in which a plurality of third primary particles are agglomerated, the third primary particles have an average diameter ($D_{50}$) of about 100 nm to about 200 nm, and the third particles have an average diameter ($D_{50}$) of about 3 $\mu$m to about 7 $\mu$m.

5. The positive electrode for a rechargeable lithium battery of any of claims 1 to 3, wherein the third particles are in the form of single particles, and the third particle have an average diameter ($D_{50}$) of about 0.5 $\mu$m to about 2.5 $\mu$m.

6. The positive electrode for a rechargeable lithium battery of any preceding claim, wherein the first primary particles have an average diameter ($D_{50}$) of about 100 nm to about 200 nm.

7. The positive electrode for a rechargeable lithium battery of any preceding claim, wherein the first particles have a porosity of about 20% to about 40%,

8. The positive electrode for a rechargeable lithium battery of any preceding claim, wherein a Span value of the first particle is about 0.3 to about 0.75.

9. The positive electrode for a rechargeable lithium battery of any preceding claim, wherein the first particles comprise coating layers containing carbon, and the first particles contain about 1.5 wt% to about 2.5 wt% of carbon.

10. The positive electrode for a rechargeable lithium battery of any preceding claim, wherein a thickness ratio of the first active material layer and the second active material layer is about 3:7 to about 7:3.

11. The positive electrode for a rechargeable lithium battery of any preceding claim, wherein with respect to a total weight of the first particles, the second particles, and the third particles included in the first active material layer and the second active material layer, the second particles amount to about 10 wt% to about 30 wt%.

12. The positive electrode for a rechargeable lithium battery of claim 11, wherein with respect to a total weight of the first particles, the second particles, and the third particles included in the first active material layer and the second active material layer, the second particles amount to about 20 wt% to about 30 wt%.

13. The positive electrode for a rechargeable lithium battery of any preceding claim, wherein the first binder and the first conductive material constitute a first functional additive,

   wherein the second binder and the second conductive material constitute a second functional additive, and
   wherein a weight ratio of the first functional additive in the first active material layer is lower than a weight ratio of the second functional additive in the second active material layer.

14. The positive electrode for a rechargeable lithium battery of claim 13, wherein a ratio of the weight ratio of the second functional additive to the weight ratio of the first functional additive is about 1.1 to about 2.6.

15. The positive electrode for a rechargeable lithium battery of any preceding claim, wherein an amount of the first binder is about 1.2 parts by weight to about 2.0 parts by weight with respect to 100 parts by weight of the first active material layer, and
wherein an amount of the second binder is about 2.0 parts by weight to about 3.0 parts by weight with respect to 100 parts by weight of the second active material layer.

# FIG. 1

# FIG. 2

FIG. 3

# FIG. 4

# FIG. 5

# FIG. 6

# FIG. 7

## FIG. 8

ATL2

PTC3

CDM2
FAD2
BND2

## FIG. 9

PTC3
NNP3   NNP3

ATL2

CDM2
FAD2
BND2

# FIG. 10

# FIG. 11

# FIG. 12

# FIG. 13

# FIG. 14

Europäisches
Patentamt

European
Patent Office

Office européen
des brevets

## EUROPEAN SEARCH REPORT

Application Number

EP 25 16 9887

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 939 296 B1 (ACCUMULATEURS FIXES [FR]) 7 June 2017 (2017-06-07) | 1-13 | INV. H01M4/36 |
| A | * paragraphs [0015], [0032]; claims 1, 16, * | 14,15 | H01M4/136 H01M4/525 H01M4/58 |
| A | Yan Wuwei ET AL: "Synthesis of Single Crystal LiNi 0.92 Co 0.06 Mn 0.01 Al 0.01 O 2 Cathode Materials with Superior Electrochemical Performance for Lithium Ion Batteries", Journal of the Electrochemical Society, 12 August 2020 (2020-08-12), page 120514, XP093008641, DOI: 10.1149/1945-7111/abacea Retrieved from the Internet: URL:https://iopscience.iop.org/article/10.1149/1945-7111/abacea/pdf [retrieved on 2022-12-15] * Results and Discussion; figure 2 * | 2-5 | H01M4/62 |
| A | LI ZHENFEI ET AL: "Effect of Ti doping on LiFePO/C cathode material with enhanced low-temperature electrochemical performance", IONICS, KIEL, DE, vol. 26, no. 4, 3 January 2020 (2020-01-03), pages 1599-1609, XP037073799, ISSN: 0947-7047, DOI: 10.1007/S11581-019-03408-4 [retrieved on 2020-01-03] * Abstract; page 1603; figure 4 * | 1,6,9 | |
| A | JP 6 560879 B2 (NEC ENERGY DEVICES LTD) 14 August 2019 (2019-08-14) * the whole document * | 1-15 | |

**TECHNICAL FIELDS SEARCHED (IPC)**

H01M

The present search report has been drawn up for all claims

| Place of search | Date of completion of the search | Examiner |
|---|---|---|
| The Hague | 26 September 2025 | Di Berardino, F |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.........................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 16 9887

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2025

| Patent document cited in search report | | Publication date | Patent family member(s) | | Publication date |
|---|---|---|---|---|---|
| EP 2939296 | B1 | 07-06-2017 | EP | 2939296 A1 | 04-11-2015 |
| | | | FR | 3000302 A1 | 27-06-2014 |
| | | | KR | 20150110510 A | 02-10-2015 |
| | | | US | 2015349334 A1 | 03-12-2015 |
| | | | WO | 2014102071 A1 | 03-07-2014 |
| JP 6560879 | B2 | 14-08-2019 | JP | 6560879 B2 | 14-08-2019 |
| | | | JP | 2016178070 A | 06-10-2016 |

EPO FORM P0459

For more details about this annex : see Official Journal of the European Patent Office, No. 12/82